# EUROPEAN PATENT APPLICATION

(11) **EP 4 120 505 A1**
(43) Date of publication of application: **18.01.2023**
(21) Application number: 22183022.7
(22) Date of filing: 05.07.2022
(51) Int. Cl.: H02J 7/00, B60L 53/68, B60L 53/80

(54) **BATTERY EXCHANGE METHOD AND BATTERY EXCHANGE SYSTEM**

(30) Priority: 16.07.2021 US 202163222667 P; 25.08.2021 US 202163236810 P
(71) Applicant: Gogoro Inc., Wanchai, Hong Kong (CN)
(72) Inventor: LIAO, En-Yi, 333 Taoyuan City (TW); CHEN, Chien-Chung, 333 Taoyuan City (TW); SHIU, Jing-Han, 333 Taoyuan City (TW); HSIAO, Hsu-Ho, 333 Taoyuan City (TW)
(74) Representative: Viering, Jentschura & Partner mbB Patent- und Rechtsanwälte

(57) **Abstract**

A battery exchange method has: receiving, from a first battery exchange station, a first alert indicating an issue regarding a battery inventory of the first battery exchange station; receiving, from a mobile device, a second alert indicating that the second battery exchange station does not release a second battery in response to an insertion of a first battery in one of a plurality of battery slots of the second battery exchange station; and providing an authorization to acquire the second battery from the second battery exchange station to the mobile device if the first and second alerts are associated with the same battery exchange station.

## Description

### BACKGROUND

### Technical Field

The present disclosure relates to a battery exchange method and a battery exchange system.

### Description of Related Art

A battery exchange station is designed to manage a plurality of exchangeable batteries such that these batteries can be readily used by one or more users. However, error can occur in any battery exchange station, and the user may not be able to successfully perform a battery exchange as a result. The current practice is to send service crew to the battery exchange station that is experiencing error to help the user, which is rather inefficient. Therefore, it is advantageous to have improved systems and methods to address said issue.

### SUMMARY

An aspect of the disclosure is to provide a battery exchange system and a battery exchange method that can efficiently solve the aforementioned problems.

In accordance with an embodiment of the present disclosure, a battery exchange method includes: receiving, from a first battery exchange station, a first alert indicating an issue regarding a battery inventory of the first battery exchange station; receiving, from a mobile device, a second alert indicating that a second battery exchange station does not release a second battery in response to an insertion of a first battery in one of a plurality of battery slots of the second battery exchange station; and providing an authorization to acquire the second battery from the second battery exchange station to the mobile device if the first and second alerts are associated with the same battery exchange station.

In accordance with an embodiment of the present disclosure, a battery exchange system includes a plurality of battery exchange stations and a backend system. The battery exchange stations each have a plurality of battery slots. The backend system is communicably coupled to the battery exchange stations and is configured to: receive a first alert from a first battery exchange station of the battery exchange stations, the first alert indicating an issue regarding a battery inventory of the first battery exchange station; receive a second alert from a mobile device, the second alert indicating that the first battery exchange station does not release a second battery in response to an insertion of a first battery in one of the battery slots of the first battery exchange station; and provide an authorization to acquire the second battery from the first battery exchange station to the mobile device if the first and second alerts are associated with the same battery exchange station.

In one or more embodiments of the present disclosure, the first battery exchange station is configured to check the battery inventory in response to a restart of the first battery exchange station.

In one or more embodiments of the present disclosure, the first battery exchange station is configured to check the battery inventory by: determining a quantity of a plurality of batteries currently positioned in the first battery exchange station; and verifying whether the quantity of the batteries currently positioned in the first battery exchange station matches a cached value. The cached value is stored in a data storage device of the first battery exchange station or the backend system.

In one or more embodiments of the present disclosure, each of the battery slots is provided with a sensor. The sensor is configured to provide a sensing signal indicative of whether a corresponding one of the battery slots is occupied. The first battery exchange station is configured to determine the quantity of the batteries currently positioned in the first battery exchange station based on the sensing signal provided by the sensor positioned in each of the battery slots.

In one or more embodiments of the present disclosure, the backend system is configured to provide the authorization to acquire the second battery from the first battery exchange station by: sending a first battery retrieval code to the mobile device; receiving a second battery retrieval code through a user interface of the first battery exchange station; verifying the second battery retrieval code based on the first battery retrieval code; and in response to successful verification of the second battery retrieval code, instructing first battery exchange station to release the second battery.

In one or more embodiments of the present disclosure, the first battery exchange station is configured to display an error reporting code on a user interface of the first battery exchange station. The error reporting code enables the mobile device to send the second alert to the backend system by scanning the error reporting code.

In one or more embodiments of the present disclosure, the backend system is further configured to: receive a request to subscribe to a battery exchange plan or to upgrade or resume a battery exchange plan subscription from the mobile device; and send a third battery retrieval code to the mobile device in response to receiving the request. A second battery exchange station of the battery exchange stations is configured to release a third battery in response to receiving the third battery retrieval code through a user interface of the second battery exchange station.

In one or more embodiments of the present disclosure, the backend system is further configured to send a notice to a service crew device after the third battery is released. The notice includes an instruction to deliver a fourth battery to the second battery exchange station.

In one or more embodiments of the present disclosure, the backend system is further configured to: receive a request to terminate, suspend or downgrade a battery exchange plan subscription from the mobile device; receive a notice from a second battery exchange station of the plurality of battery exchange stations, the notice indicating that one or more batteries have been returned to the second battery exchange station; and record data indicating that the battery exchange plan subscription has been terminated, suspended or downgraded in response to receiving the notice.

In one or more embodiments of the present disclosure, the backend system is further configured to reserve at least a first number of empty battery slots at the second battery exchange station in response to receiving the request. The first number is equal to a sum of a default empty slot count and a quantity of the one or more batteries to be returned.

In sum, the methods and the systems of the present disclosure enable the user to complete a battery exchange process interrupted by an error, pick up a battery from the battery exchange station, and return a battery to the battery exchange station without the assistance of service crews. Accordingly, user experience is improved and the labor cost of the operator of the system can be reduced.

It is to be understood that both the foregoing general description and the following detailed description are by examples, and are intended to provide further explanation of the disclosure as claimed.

### BRIEF DESCRIPTION OF THE DRAWINGS

To make the objectives, features, advantages, and embodiments of the present disclosure, including those mentioned above and others, more comprehensible, descriptions of the accompanying drawings are provided as follows.
Fig. 1 illustrates a schematic view of a battery exchange system in accordance with an embodiment of the present disclosure;
Fig. 2 illustrates a block diagram of one of the battery exchange stations shown in Fig. 1;
Figs. 3A and 3B illustrate a flowchart for a method of exchanging battery at a battery exchange station in accordance with an embodiment of the present disclosure;
Figs. 4A and 4B illustrate a flowchart for a method of acquiring battery from a battery exchange station in accordance with an embodiment of the present disclosure; and
Fig. 5 illustrates a flowchart for a method of returning battery to a battery exchange station in accordance with an embodiment of the present disclosure.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts. However, specific structural and functional details disclosed herein are merely representative for purposes of describing example embodiments, and thus may be embodied in many alternate forms and should not be construed as limited to only example embodiments set forth herein. Therefore, it should be understood that there is no intent to limit example embodiments to the particular forms disclosed, but on the contrary, example embodiments are to cover all modifications, equivalents, and alternatives falling within the scope of the disclosure.

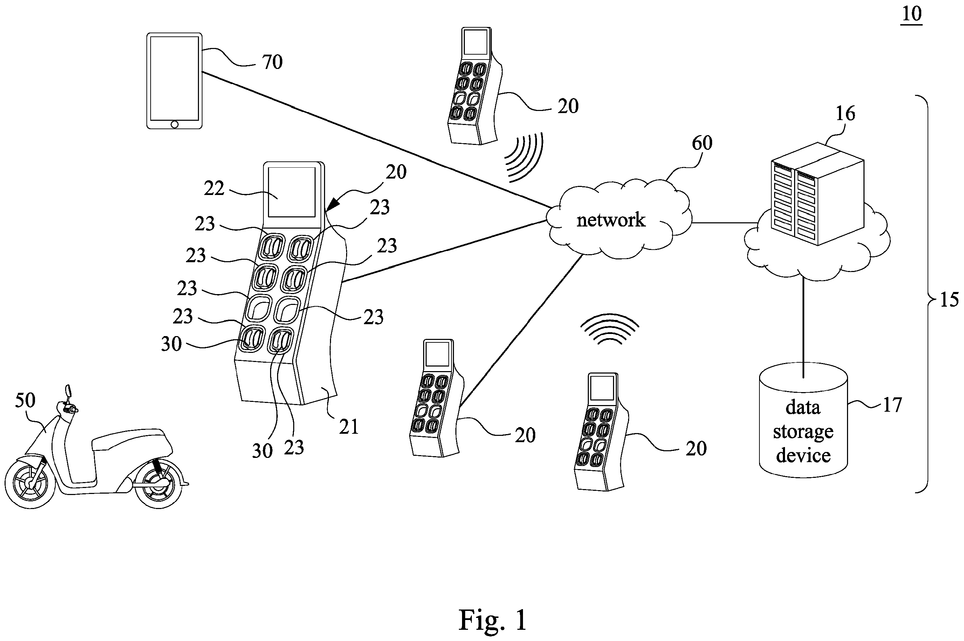

Reference is made to Fig. 1, which illustrates a schematic view of a battery exchange system 10 in accordance with an embodiment of the present disclosure. The battery exchange system 10 includes a plurality of battery exchange stations 20 positioned at multiple different locations. Each of the battery exchange stations 20 includes a battery exchange rack 21 and a user interface 22 positioned on the battery exchange rack 21. The battery exchange rack 21 includes a plurality of battery slots 23. The battery slots 23 are configured to accommodate one or more batteries 30, which can be provided to users. The user interface 22 is configured to interact with users (e.g., receiving inputs from the users and presenting information to the users). The user interface 22 may include a display and an input device. In some embodiments, the user interface 22 may be implemented as a touchscreen display capable of both displaying information and receiving user inputs.

As shown in Fig. 1, during operation, some of the battery slots 23 are occupied by a battery 30, and some of the battery slots 23 are empty (i.e., not occupied by a battery). The batteries 30 positioned in the battery slots 23 can be categorized into two groups: exchangeable and non-exchangeable. A non-exchangeable battery is a battery that is currently not available to users. An exchangeable battery can be provided to a user (e.g., a user of a vehicle 50, which may be an electric vehicle) in exchange for a battery in possession of the user (e.g., a battery which is placed in the vehicle 50 by the user to power the vehicle 50). In some embodiments, an exchangeable battery 30 can be provided to a user without the user returning a battery to the battery exchange station 20. The empty battery slots 23 allow users to insert batteries to be exchanged (e.g., low power batteries). In some embodiments, a user can insert one or more batteries in the empty battery slots 23 without receiving any battery from the battery exchange station 20 in return.

In some embodiments, an indication of whether each battery 30 is currently exchangeable or non-exchangeable may be provided by the battery exchange stations 20, such that the user can visually identify the availability of each battery 30. The indication can be in the form of: colors or icons displayed on the user interface 22, using different arrangements for exchangeable batteries and non-exchangeable batteries (such as different orientations), etc.

As shown in Fig. 1, the battery exchange system 10 further includes a backend system 15. The backend system 15 is communicably coupled to the battery exchange stations 20 via a network 60, such that the backend system 15 can exchange information with the battery exchange stations 20 (e.g., by sending data over the network 60). The network 60 may be local area network (LAN), wide area network (WAN), cellular network (e.g., LTE or 5G), Internet, public/private network, wired/wireless network, or other types of communication networks. In some embodiments, the backend system 15 includes one or more computer servers 16 and one or more data storage devices 17 communicably coupled to the one or more computer servers 16.

The backend system 15 is configured to manage the battery exchange stations 20. For example, the backend system 15 can perform one or more of the following operations: making demand predictions for the battery exchange stations 20; collecting data from the battery exchange stations 20 or the batteries 30 positioned in the battery exchange stations 20 for analysis; monitoring the status of the battery exchange stations 20 (e.g., the number of batteries 30 currently held by each battery exchange station 20, the state-of-charge (SoC) of the batteries 30 positioned in the battery exchange stations 20, etc.); or providing information regarding how to charge the batteries 30 to the battery exchange stations 20.

In some embodiments, the operator of the battery exchange system 10 may offer multiple paid battery exchange plans. A user can subscribe to one of the battery exchange plans provided by the operator to exchange batteries at the battery exchange stations 20. A battery exchange plan may specify the number of batteries a subscribed user can exchange at a time at a battery exchange station. For example, the operator of the battery exchange system 10 may offer two different battery exchange plans: Plan X and Plan Y. Plan X designates that any user subscribing to Plan X is allowed to exchange one battery at a time at one of the battery exchange stations 20, while Plan Y designates that any user subscribing to Plan Y is allowed to exchange two batteries at a time at one of the battery exchange stations 20.

In some embodiments, the number of empty battery slots 23 in each of the battery exchange stations 20 is, by default, equal to the maximum number of batteries a user can exchange at a time. In the foregoing example, because the users that subscribe to Plan Y can exchange two batteries at a time, the number of empty battery slots 23 in each of the battery exchange stations 20 is set to two by default.

For each battery exchange station 20, the number of empty battery slots 23 can change when (i) the battery exchange station 20 releases a battery to a user but does not receive one from the user, (ii) the battery exchange station 20 receives a battery from a user but does not release one to the user, (iii) a service crew adds one or more batteries to the battery exchange station 20, or (iv) a service crew removes one or more batteries from the battery exchange station 20.

In some embodiments, in order to keep the battery exchange station 20 operating, the number of empty battery slots must always be not less than the default number (e.g., two). If the empty battery slot count at any of the battery exchange stations 20 is currently less than the default number or is expected to be less than the default number, then service crews can be dispatched to remove one or more batteries 30 from the battery exchange station 20 to create more empty battery slots.

In some embodiments, the backend system 15 is further configured to manage user's subscription to the battery exchange plans. For example, the backend system 15 may keep a list of subscribed users and the battery exchange plan subscribed by each user in the data storage devices 17. Said information may be recorded in the form of a database table (i.e., the backend system 15 is configured to set up a user subscription database).

In some embodiments, a user can subscribe to a battery exchange plan via a mobile device 70 communicably coupled to the backend system 15 via the network 60. For example, the user may install an application developed by or provided by the operator of the battery exchange system 10 on the mobile device 70, and the user can access the services provided by the operator via the application. The application may include a menu that enables the user to select a battery exchange plan he/she would like to subscribe to. Once the user makes his/her choice, the mobile device 70 can send a request to the backend system 15 indicating that the user would like to subscribe to a particular battery exchange plan. When such request is received, the backend system 15 can update the user subscription database to include information of the new subscriber/user.

In some embodiments, the operator of the battery exchange system 10 may provide a subscribed user with the option to change to a different battery exchange plan. For example, the mobile device 70 can receive commands from the user and send a request to the backend system 15 indicating that the user would like to change his/her subscription from one battery exchange plan to a different battery exchange plan. When such request is received, the backend system 15 can update the user subscription database to reflect the change of the user's subscription.

In some embodiments, the change of the user's subscription can be an "upgrade" from a plan that allows the user to exchange relatively fewer batteries at a time to another plan that allows the user to exchange relatively more batteries at a time. For example, the user can upgrade from Plan X mentioned above, which allows the user to exchange one battery at a time, to Plan Y, which allows the user to exchange two batteries at a time. In some embodiments, a user who upgrades his/her battery exchange plan subscription can retrieve one or more batteries from one of the battery exchange stations 20 without returning any battery.

In some embodiments, the change of the user's subscription can be a "downgrade" from a plan that allows the user to exchange relatively more batteries at a time to another plan that allows the user to exchange relatively fewer batteries at a time. For example, the user can downgrade from Plan Y mentioned above, which allows the user to exchange two batteries at a time, to Plan X, which allows the user to exchange one battery at a time. In some embodiments, a user who downgrades his/her battery exchange plan subscription can return one or more batteries to one of the battery exchange stations 20 without receiving any battery in return.

In some embodiments, the operator of the battery exchange system 10 may provide a subscribed user with the option to terminate, suspend or resume his/her subscription. For example, the mobile device 70 can receive commands from the user and send a request to the backend system 15 indicating that the user would like to terminate, suspend or resume his/her subscription. When such request is received, the backend system 15 can update the user subscription database to reflect the termination, suspension or resumption of the user's subscription.

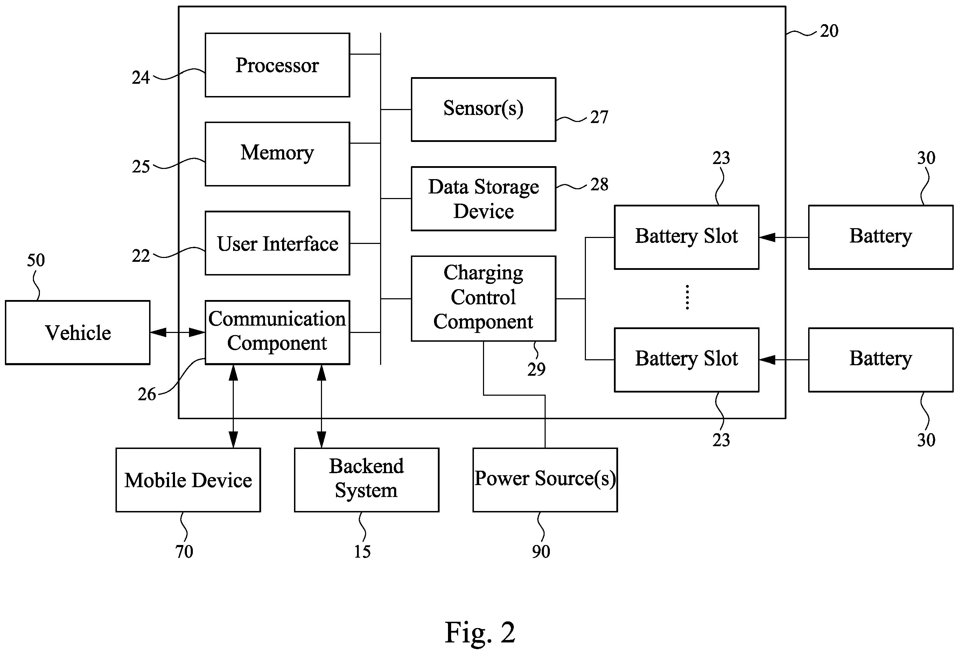

Reference is made to Fig. 2, which illustrates a schematic block diagram of one of the battery exchange stations 20 shown in Fig. 1. As shown in Fig. 2, the battery exchange station 20 further includes a processor 24 and a memory 25. The processor 24 is configured to interact with the memory 25 and other components in the battery exchange station 20. The memory 25 is coupled to the processor 24 and is configured to store instructions for controlling other components or other information in the battery exchange station 20.

As shown in Fig. 2, the battery exchange station 20 further includes a communication component 26. The communication component 26 is configured to communicate with other systems, such as the vehicle 50 (e.g., an electric vehicle that uses battery as its power source), the mobile device 70 and the backend system 15. In some embodiments, the communication component 26 includes at least one network interface controller (NIC).

As shown in Fig. 2, the battery exchange station 20 further includes one or more sensors 27 (e.g., NFC module, proximity sensors, contact sensors, infrared sensors, etc.). Each of the sensors 27 is mounted in one of the battery slots 23 and is configured to provide a sensing signal indicative of whether a respective battery slot 23 is occupied by a battery 30.

As shown in Fig. 2, the battery exchange station 20 further includes at least one data storage device 28. The data storage device 28 is configured to store, temporarily or permanently, information, data, files, or signals associated with the battery exchange station 20.

As shown in Fig. 2, the battery exchange station 20 further includes a charging control component 29. The charging control component 29 is configured to control a charging process for each of the batteries 30 positioned in the battery slots 23. The charging control component 29 can receive power from at least one power source 90 (e.g., power grid, solar panel or wind turbine) and then use the received power to charge the batteries 30 positioned in the battery slots 23. In some embodiments, the battery exchange station 20 uses the power received from the power source 90 to perform other tasks, such as powering the user interface 22, communicating with the backend system 15, the vehicle 50 or the mobile device 70, etc.

In some embodiments, each of the battery slots 23 includes a data transmission interface (e.g., an electrical connector, a Bluetooth transceiver, an NFC transceiver, etc.) through which the battery exchange station 20 can read data from or write data to a battery memory built in the battery 30. In some embodiments, the battery memory is configured to store characteristic information associated with the battery 30. In some embodiments, the battery memory is configured to store data indicative of a current user of the battery 30 (e.g., a user ID, or a battery ID that can be mapped to a current user based on the information kept by the backend system 15 and/or the battery exchange station 20). In such embodiments, the battery exchange station 20 can identify the user currently exchanging battery at the battery exchange station 20 by reading data from the battery memory of the battery inserted by the user.

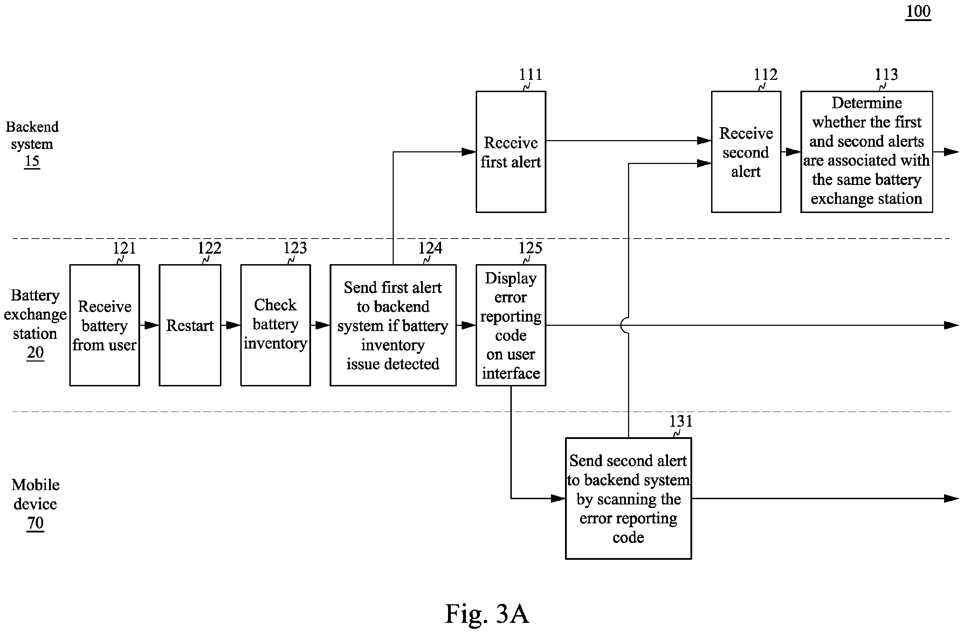

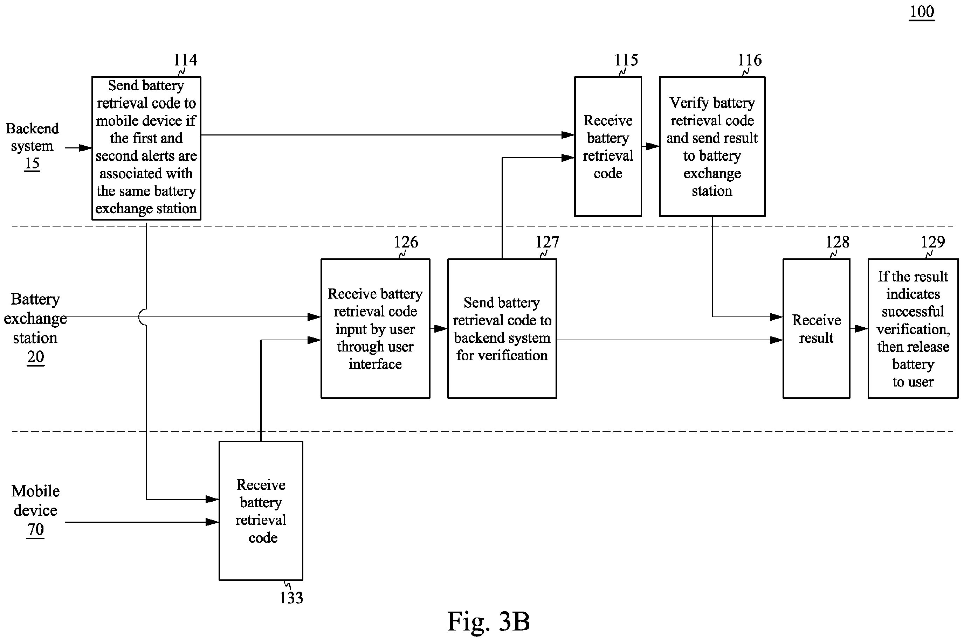

Figs. 3A and 3B illustrate a flowchart for a method of exchanging battery at a battery exchange station 100 in accordance with an embodiment of the present disclosure. Specifically, the method 100 is a method for recovering from an erroneous battery exchange process, in which a user could not retrieve battery from the battery exchange station as a result of the battery exchange station encountering an error that causes the battery exchange station to restart. The method 100 can advantageously be implemented by the backend system 15 and the battery exchange stations 20, so that the user involved in the erroneous battery exchange process does not have to wait for a service crew to come over to resolve the issue.

As shown in Figs. 2 and 3A, a battery exchange process starts with a user arriving at one of the battery exchange stations 20 (first battery exchange station) and inserting a battery (first battery) in one of the empty battery slots 23 of the battery exchange station 20. The battery exchange station 20 thus receives the battery from the user (Step 121). In some embodiments, each battery slot 23 is provided with a locking mechanism. The locking mechanism is configured to lock the battery inserted into the battery slot 23.

As shown in Figs. 2 and 3A, the battery exchange station 20 might encounter an error that causes the battery exchange station 20 to restart (Step 122). The restart of the battery exchange station 20 can be a full-system restart of the battery exchange station 20 or a restart of one or more subsystems of the battery exchange station 20. The error can happen before the battery exchange station 20 releases another battery to the user in exchange for the battery inserted by the user. The error can be a software or hardware issue of the battery exchange station 20. In some embodiments, the entire battery exchange station 20 or a subsystem (e.g., a sensor or a circuit module) arranged in the battery slot 23 of the battery exchange station 20 may restart in response to the user pushing the battery into the battery slot 23 too hard or inserting the battery with a wrong insertion angle.

As shown in Figs. 2 and 3A, after the battery exchange station 20 restarts and performs an initialization, the battery exchange station 20 is configured to check its battery inventory (Step 123). In some embodiments, Step 123 includes: determining a quantity of the batteries 30 currently positioned in the battery exchange station 20; and verifying whether the determined quantity of the batteries 30 currently positioned in the battery exchange station 20 matches a cached value. The cached value can be stored in a data storage device of the battery exchange station 20 or the backend system 15, and the cached value is recorded in the data storage device before the restart of the battery exchange station 20.

For example, suppose that before the user starts exchanging battery at the battery exchange station 20, the number of batteries in the battery exchange station 20 is six. Since the number of batteries in the battery exchange station 20 is not expected to change after the battery exchange process, the number of batteries in the battery exchange station 20 recorded by the battery exchange station 20 and/or the backend system 15 remains unchanged after the user inserts a battery into the battery exchange station 20. However, if an error causes the battery exchange station 20 to restart at a point after the user has inserted battery and before the battery exchange station 20 releases battery to the user, after the restart, the battery exchange station 20 would detect that the number of batteries in the battery exchange station 20 is "seven", which is different from the cache value "six".

In some embodiments, the determining the quantity of the batteries 30 currently positioned in the battery exchange station 20 is based on sensing signals provided by the sensors 27. The sensors 27 are each positioned in one of the battery slots 23, and the sensing signal provided by each sensor 27 is indicative of whether a respective battery slot 23 is occupied.

As shown in Figs. 2 and 3A, if the battery exchange station 20 detects a battery inventory issue (e.g., a mismatch between the determined quantity of the batteries 30 currently positioned in the battery exchange station 20 and the cached value), then the battery exchange station 20 reports the battery inventory issue to the backend system 15 by sending a first alert to the backend system 15 (Step 124). In Step 111, the backend system 15 receives the first alert from the battery exchange station 20.

In a standard battery exchange process which does not involve the user changing his/her subscription, the battery exchange station 20 receiving a number of batteries from the user is required to provide the same number of batteries in return. However, due to the battery inventory issue, the battery exchange process is suspended and the user is temporarily unable to retrieve battery from the battery exchange station 20. The user can report to the backend system 15 using the mobile device 70 associated with the user.

As shown in Figs. 2 and 3A, in some embodiments, the battery exchange station 20 is configured to display an error reporting code (e.g., a QR code) on the user interface 22 of the battery exchange station 20 (Step 125), and the mobile device 70 can send a second alert to the backend system 15 by scanning the error reporting code (Step 131). The second alert indicates that the battery exchange station 20 does not release a second battery to the user in response to the user inserting a first battery into one of the battery slots 23 of the battery exchange station 20. The second alert may include identification information of the battery exchange station 20 where the user cannot successfully exchange battery (e.g., an ID or a name of the battery exchange station 20).

In some embodiments, the user interface 22 of the battery exchange station 20 is configured to display a service menu, which includes a "cannot acquire battery" option. The user interface 22 is configured to display the error reporting code in response the user selecting the "cannot acquire battery" option.

As shown in Figs. 2 and 3A, after receiving the second alert from the mobile device 70 (Step 112), the backend system 15 is configured to determine whether the first and second alerts are associated with the same battery exchange station (Step 113). In some embodiments, the backend system 15 may receive multiple first alerts, each sent by a different battery exchange station. To manage these alerts, the backend system 15 can keep a list of first alerts that are "pending". In this case, the backend system 15 is configured to verify whether the second alert and any one of the first alerts in the "pending list" are associated with the same battery exchange station.

As shown in Figs. 2 and 3B, if the first and second alerts are associated with the same battery exchange station, then the backend system 15 generates a battery retrieval code (e.g., a number or a string) and sends the battery retrieval code (such as sending a first battery retrieval code) to the mobile device 70 (Step 114). On the other hand, if the first and second alerts are not associated with the same battery exchange station (or if the "pending list" is currently empty, which means that no outstanding battery inventory issue), then the backend system 15 returns an error code to the mobile device 70.

As shown in Figs. 2 and 3B, in Step 133, the mobile device 70 receives the battery retrieval code from the backend system 15. Having received the battery retrieval code, the user can provide the battery retrieval code to the battery exchange station 20 to acquire battery from the battery exchange station 20. In some embodiments, the battery retrieval code is a one-time code, meaning that the user can only use the code to retrieve battery from the battery exchange station 20 once.

As shown in Figs. 2 and 3B, in Step 126, the battery exchange station 20 receives a battery retrieval code (second battery retrieval code) input by the user through the user interface 22. Next, in Step 127, the battery exchange station 20 sends or uploads the received battery retrieval code to the backend system 15 for verification. The backend system 15 receives the battery retrieval code from the battery exchange station 20 (Step 115), verifies the received battery retrieval code (i.e., check if the received battery retrieval code is valid) and sends the result of the verification to the battery exchange station 20 (Step 116). In some embodiments, the backend system 15 may compare the first battery retrieval code with the second battery retrieval code, and generate the result of the verification based on a result of the comparison.

As shown in Figs. 2 and 3B, in Step 128, the battery exchange station 20 receives the result of the verification from the backend system 15. If the result indicates successful verification (i.e., the battery retrieval code input by the user is valid), then the battery exchange station 20 releases one or more batteries to the user (Step 129). In some embodiments, the battery exchange station 20 releases one or more batteries to the user by unlocking the locking mechanism in one or more battery slots 23.

On the other hand, if the result indicates unsuccessful verification (i.e., the battery retrieval code input by the user is invalid), then the battery exchange station 20 does not release any battery to the user. Instead, the battery exchange station 20 can display a warning on the user interface 22 to inform the user that the battery retrieval code input by the user is invalid.

In some embodiments, the backend system 15 keeps a list of valid battery retrieval codes (e.g., a list containing the battery retrieval codes generated by the backend system 15), and the backend system 15 checks if the battery retrieval code uploaded by the battery exchange station 20 is in the list of valid battery retrieval codes to determine its validity.

In some embodiments, the battery retrieval code input by the user can instead be verified locally at the battery exchange station 20. For example, the backend system 15 can send the battery retrieval code provided to the mobile device 70 in Step 114 to the battery exchange station 20, so that the battery exchange station 20 can check whether the battery retrieval code input by the user matches the one provided by the backend system 15 to determine its validity.

In some embodiments, after Step 129, the battery exchange station 20 can notify the backend system 15 that battery has been released to the user. In response to receiving the notification, the backend system 15 can remove the associated first alert from the "pending list" mentioned above and delete the battery retrieval code sent to the mobile device 70 from the list of valid battery retrieval codes.

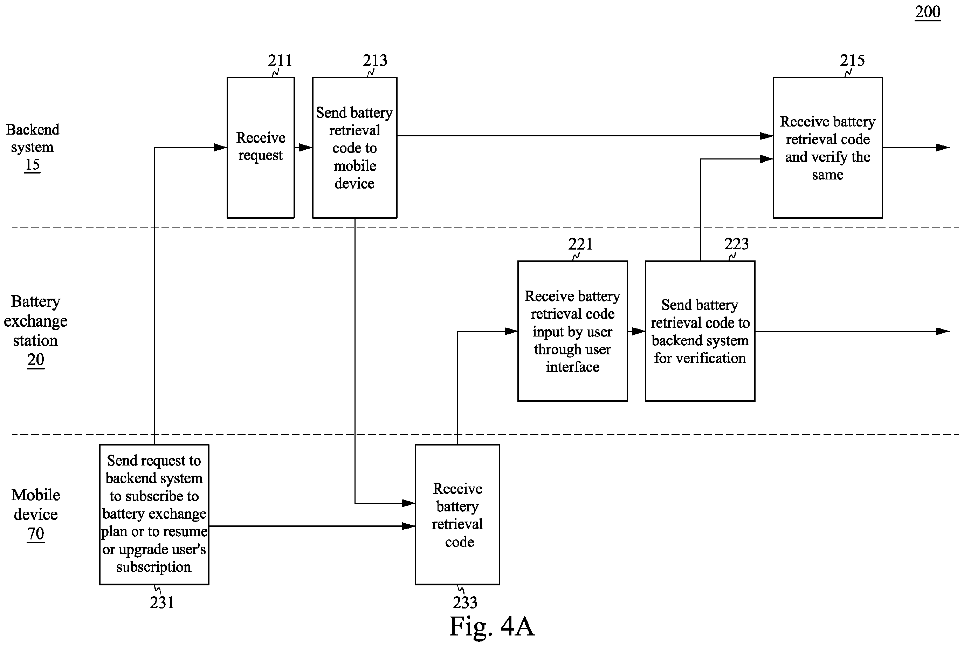

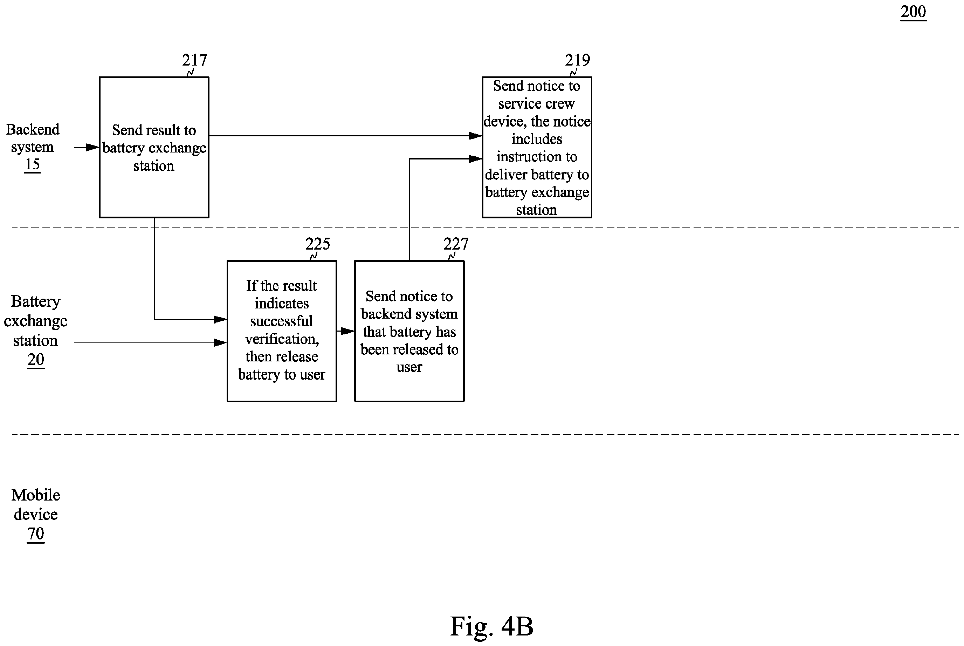

Figs. 4A and 4B illustrate a flowchart for a method of acquiring battery from a battery exchange station 200 in accordance with an embodiment of the present disclosure. Specifically, the method 200 is a method for a user to acquire or pick up a battery from one of the battery exchange stations 20 without returning one (e.g., when a new user subscribes to one of the battery exchange plans provided by the operator of the battery exchange system 10, when a user requests to upgrades his/her subscription, or when a user requests to have his/her previously suspended subscription resumed).

When a user needs to acquire a battery instead of performing an exchange, the current practice is to require the user to acquire battery from a service station or send service crews to the battery exchange station 20 to help the user acquire battery (e.g., the service crews may have authorization to take out the batteries 30 in the battery exchange station 20). The method 200 of the present disclosure can advantageously be implemented by the backend system 15 and the battery exchange stations 20, so that the user can acquire battery from the battery exchange stations 20 conveniently and unassisted.

As shown in Figs. 2 and 4A, in Step 231, the mobile device 70 sends a request to the backend system 15 to subscribe to a battery exchange plan or to upgrade or resume a user's subscription. In Step 211, the backend system 15 receives the request from the mobile device 70. In response to receiving the request, the backend system 15 generates a battery retrieval code (such as a third battery retrieval code) and sends the battery retrieval code to the mobile device 70 (Step 213). The backend system 15 may also update the user subscription database in accordance with the request (e.g., add the new subscriber to the user subscription database or record data indicating that the subscription of the user has been resumed or upgraded in the user subscription database).

As shown in Figs. 2 and 4A, in Step 233, the mobile device 70 receives the battery retrieval code from the backend system 15. The user can then use the battery retrieval code to acquire battery (third battery) from a battery exchange station of his/her choice. For example, the user can go to the nearest battery exchange station 20 to acquire battery for convenience.

In some embodiments, the battery retrieval code is associated with an expire time. After the expire time, the battery retrieval code is invalidated and cannot be used to acquire battery. In some embodiments, the expire time is sent along with the battery retrieval code to the mobile device 70, and the mobile device 70 can present the expire time to the user along with the battery retrieval code. In some embodiments, the user may request a new battery retrieval code from the backend system 15 via the mobile device 70 after the previously received battery retrieval code expires and has not been used.

In some embodiments, the backend system 15 can determine that some of the battery exchange stations 20 in the battery exchange system 10 cannot provide battery acquiring service to the user, or that during some time period (e.g., peak hours, during which the battery exchange stations 20 is expected to experience high demand), the battery exchange stations 20 cannot provide battery acquiring service the user. In such embodiments, the backend system 15 can send a list of battery exchange stations 20 that does not provide the battery acquiring service and a list of time periods the battery acquiring service is unavailable to the mobile device 70.

As shown in Figs. 2, 4A and 4B, in Step 221, the battery exchange station 20 receives a battery retrieval code input by the user through the user interface 22. Next, in Step 223, the battery exchange station 20 sends or uploads the received battery retrieval code to the backend system 15 for verification. The backend system 15 receives the battery retrieval code from the battery exchange station 20 (Step 215), verifies the received battery retrieval code and sends the result of the verification to the battery exchange station 20 (Step 217). In some embodiments, the backend system 15 may compare the third battery retrieval code with the battery retrieval code inputted by the user in step 221, and generate the result of the verification based on a result of the comparison.

As shown in Figs. 2 and 4B, in Step 225, if the result received by the battery exchange station 20 indicates successful verification, then the battery exchange station 20 releases one or more batteries to the user. On the other hand, if the result indicates unsuccessful verification, then the battery exchange station 20 does not release any battery to the user. Instead, the battery exchange station 20 can display a warning on the user interface 22 to inform the user that the battery retrieval code input by the user is invalid.

As shown in Figs. 2 and 4B, after releasing battery to the user, the battery exchange station 20 sends a notice indicating that battery has been released to the user to the backend system 15 (Step 227). In response to receiving the notice, the backend system 15 can record data about the release of battery and invalidate the battery retrieval code.

As shown in Figs. 2 and 4B, in some embodiments, the backend system 15 is configured to send a notice to a service crew device (e.g., a mobile device associated with a service crew). The notice includes an instruction to deliver one or more batteries to the battery exchange station 20 (Step 219) to make up for the one or more batteries taken by the user from the battery exchange station 20. In some embodiments, sending the notice to the service crew to deliver battery to the battery exchange station 20 can be delayed if the backend system 15 determines that the batteries 30 in the battery exchange station 20 can satisfy the predicted demand for the battery exchange station 20 in the upcoming hours/days. The determination can be based on the number of batteries in the battery exchange station 20, the state of each battery 30 in the battery exchange station 20, or other factors.

In some embodiments, along with the result of the verification, the backend system 15 is configured to send characteristic information of the vehicle 50 associated with the user (which may include the number of batteries the vehicle 50 can use), information regarding the user's subscription (which may include the number of batteries the user can exchange at a time), and/or the reason for picking up battery to the battery exchange station 20. Based on said information, the battery exchange station 20 can select one or more batteries to release to the user.

In some embodiments, the battery exchange station 20 is configured to determine whether its current battery inventory can fulfill the user's request to pick up battery (e.g., checking if the battery exchange station 20 has enough batteries or has the type of battery the user needs). The determination can be based on the received information mentioned in the previous paragraph. If negative, the battery exchange station 20 can display a warning on the user interface 22, and in some embodiments, provide information to direct the user to other battery exchange stations.

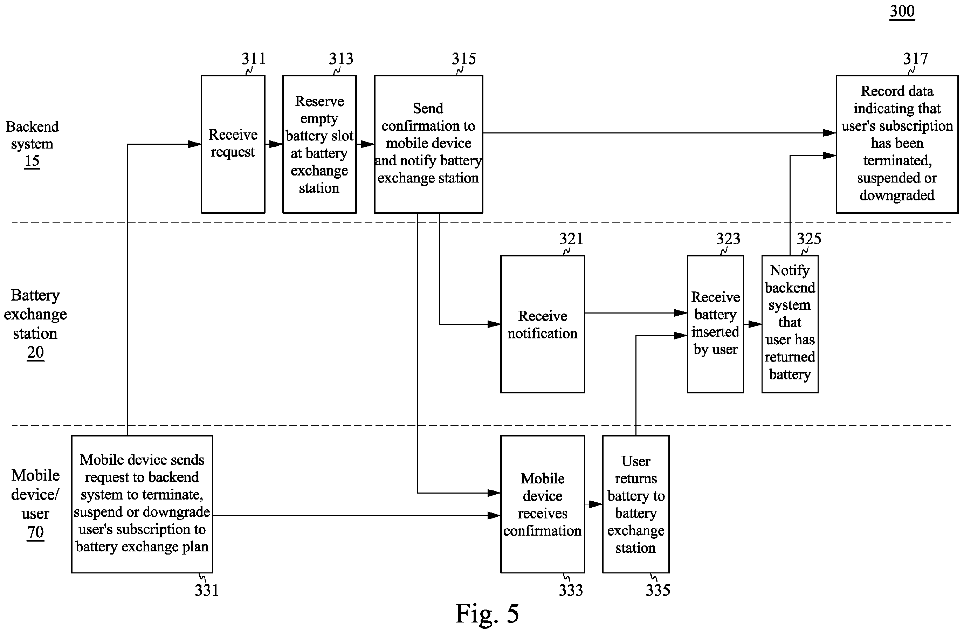

Fig. 5 illustrates a flowchart for a method of returning battery to a battery exchange station 300 in accordance with an embodiment of the present disclosure. Specifically, the method 300 is a method for a user to return a battery to one of the battery exchange stations 20 without receiving one (e.g., when a subscribed user requests to terminate, suspend or downgrade his/her subscription).

When a user needs to return a battery instead of performing an exchange, the current practice is to require the user to return the battery to a service station or send service crews to the battery exchange station 20 to help the user return the battery (e.g., the service crews may have authorization to put a battery into the battery exchange station 20). The method 300 of the present disclosure can advantageously be implemented by the backend system 15 and the battery exchange stations 20, so that the user can return battery to the battery exchange stations 20 conveniently and unassisted.

As shown in Figs. 2 and 5, in Step 331, the mobile device 70 sends a request to the backend system 15 to terminate, suspend or downgrade a user's battery exchange plan subscription. The request may include the date and the location (e.g., one of the battery exchange stations 20) to return battery, which are designated by the user.

In some embodiments, the mobile device 70 is configured to display a map indicating the locations at which batteries can be returned. The user can choose the location to return battery by clicking on the map. In some embodiments, the mobile device 70 may show recommended locations to return battery (e.g., by highlighting these locations on the map). The recommended locations may be determined based on the number of empty battery slots in each battery exchange station 20 on the date designated by the user, the number of batteries scheduled to be returned to each battery exchange station 20 on the date designated by the user, or other factors.

As shown in Figs. 2 and 5, in Step 311, the backend system 15 receives the request from the mobile device 70. In response to receiving the request, the backend system 15 determines the number of batteries the user should return based on the subscription of the user and/or the request. For example, if the user requests to terminate or suspend his/her subscription to Plan Y, then the user should return two batteries. For example, if the user requests to downgrade his/her subscription from Plan Y to Plan X, then the user should return one battery.

The backend system 15 then, based on the determination, reserves at least one empty battery slot 23 at the battery exchange station 20 designated by the user (Step 313). In some embodiments, Step 313 includes sending a notice to a service crew device (e.g., a mobile device associated with a service crew). The notice includes an instruction to remove at least one battery 30 from the designated battery exchange station 20. In some embodiments, the backend system 15 notifies the service crew to remove battery from the designated battery exchange station 20 if the backend system 15 predicts that on the date designated by the user, the designated battery exchange station 20 will not have enough empty battery slots 23 (e.g., not enough empty battery slot to allow the user to return battery, or not enough empty battery slot to allow other users to exchange battery after the user returns battery).

In some embodiments, the backend system 15 is configured to reserve at least a first number of empty battery slots at the battery exchange station 20 designated by the user. The first number is the sum of a default empty slot count (e.g., the maximum number of batteries a user can exchange at a time) and the number of batteries to be returned by the user. Said arrangement ensures that after the user returns battery to the designated battery exchange station 20, the designated battery exchange station 20 can still have enough empty battery slot to allow other users to exchange battery. In some embodiments, if the backend system 15 determines that the number of empty battery slots at the designated battery exchange station 20 is less than the first number, then the backend system 15 sends the notice to the service crew to remove one or more batteries from the designated battery exchange station 20 before the date the user is scheduled to return battery.

As shown in Figs. 2 and 5, next, the backend system 15 sends a confirmation to the mobile device 70 and notifies the battery exchange station 20 at which the reservation is made (Step 315). In Step 321, the battery exchange station 20 receives the notification from the backend system 15, and in Step 333, the mobile device 70 receives the confirmation from the backend system 15. In some embodiments, Step 315 can occur before or concurrently with Step 313.

As shown in Figs. 2 and 5, the user can return at least one battery to the designated battery exchange station 20 on the designated date (Step 335). The battery exchange station 20 receives the battery inserted by the user in the empty battery slots 23 (Step 323), and then notify the backend system 15 that the user has returned battery (Step 325). In response to receiving the notification, the backend system 15 records data indicating that the subscription of the user has been terminated, suspended or downgraded (Step 317). For example, the backend system 15 can update the user subscription database to reflect the termination, suspension or downgrade of the user's subscription.

In some embodiments, the mobile device 70 can send a request to the backend system 15 to terminate, suspend or downgrade the user's battery exchange plan subscription without specifying the date and the location to return battery. In such embodiments, the user can go to any battery exchange station to return battery (provided that the battery exchange station has enough empty battery slots). The battery exchange station 20 which receives battery from the user can notify the backend system 15 that the user has returned battery. In response to receiving the notification from the battery exchange station 20, the backend system 15 can record data indicating that the battery subscription of the user has been terminated, suspended or downgraded, and in some embodiments, send a notice to a service crew to remove at least one battery 30 from the battery exchange station 20 which the user returned battery to.

Although the backend system 15 and the battery exchange stations 20 are illustrated as separate entities in above embodiments, the present disclosure is not limited in this regard. In some embodiments, the backend system 15 may be implemented by one or more of the battery exchange stations 20 (e.g., the backend system 15 can be a distributed system consisting of some or all of the battery exchange stations 20). In such embodiments, some or all of the aforementioned steps 111-116, 211, 213, 215, 217, 219, 311, 313, 315 and 317 may be performed by the one or more battery exchange stations 20.

In sum, the methods and the systems of the present disclosure enable the user to complete a battery exchange process interrupted by an error, pick up a battery from the battery exchange station, and return a battery to the battery exchange station without the assistance of service crews. Accordingly, user experience is improved and the labor cost of the operator of the system can be reduced.

## Claims

1. A battery exchange method, **characterized by** comprising:
receiving, from a first battery exchange station (20), a first alert indicating an issue regarding a battery inventory of the first battery exchange station (20);
receiving, from a mobile device (70), a second alert indicating that a second battery exchange station (20) does not release a second battery (30) in response to an insertion of a first battery into one of a plurality of battery slots (23) of the second battery exchange station (20); and
providing an authorization to acquire the second battery (30) from the second battery exchange station (20) to the mobile device (70) if the first alert and the second alert are associated with the same battery exchange station.

2. The method of claim 1, further comprising:
in response to a restart of the first battery exchange station (20), checking the battery inventory of the first battery exchange station (20).

3. The method of claim 2, wherein the step of checking the battery inventory of the first battery exchange station (20) comprises:
determining a quantity of a plurality of batteries (30) currently positioned in the first battery exchange station (20); and
verifying whether the quantity of the batteries (30) currently positioned in the first battery exchange station (20) matches a cached value, wherein the cached value is stored in a data storage device (17 or 28) of the first battery exchange station (20) or a backend system (15).

4. The method of claim 3, wherein the determination of the quantity com prises:
providing, by a plurality of sensors (27) each positioned in one of a plurality of battery slots (23) of the first battery exchange station (20), sensing signals indicative of whether each of the battery slots (23) of the first battery exchange station (20) is occupied; and
determining the quantity of the batteries (30) currently positioned in the first battery exchange station (20) based on the sensing signals.

5. The method of any preceding claim, wherein the step of providing the authorization to acquire the second battery (30) from the second battery exchange station (20) comprises:
sending a first battery retrieval code to the mobile device (70);
receiving a second battery retrieval code through a user interface (22) of the second battery exchange station (20);
verifying the second battery retrieval code based on the first battery retrieval code; and
in response to successful verification of the second battery retrieval code, releasing the second battery (30) by the second battery exchange station (20).

6. The method of any of claims 1-4, further comprising:
displaying an error reporting code on a user interface (22) of the second battery exchange station (20);
wherein the error reporting code enables the mobile device (70) to send the second alert by scanning the error reporting code.

7. The method of any preceding claim, further comprising:
receiving, from the mobile device (70), a request to subscribe to a battery exchange plan or to upgrade or resume a battery exchange plan subscription;
in response to receiving the request, sending a third battery retrieval code to the mobile device (70); and
releasing a third battery (30) by a third battery exchange station (20) in response to receiving the third battery retrieval code through a user interface (22) of the third battery exchange station (20).

8. The method of claim 7, further comprising:
sending a notice to a service crew device after the third battery (30) is released, the notice including an instruction to deliver a fourth battery to the third battery exchange station (20).

9. The method of any preceding claim, further comprising:
receiving, from the mobile device (70), a request to terminate, suspend or downgrade a battery exchange plan subscription;
receiving, from a fourth battery exchange station (20), a notice indicating that one or more batteries have been returned to the fourth battery exchange station (20); and
in response to receiving the notice, recording data indicating that the battery exchange plan subscription has been terminated, suspended or downgraded.

10. The method of claim 9, further comprising:
in response to receiving the request, reserving at least a first number of empty battery slots (23) at the fourth battery exchange station (20), wherein the first number is equal to a sum of a default empty slot count and a quantity of the one or more batteries to be returned.

11. A battery exchange system (10), **characterized by** comprising:
a plurality of battery exchange stations (20), each having a plurality of battery slots (23); and
a backend system (15), communicably coupled to the plurality of battery exchange stations (20) and configured to:
receive a first alert from a first battery exchange station of the plurality of battery exchange stations (20), the first alert indicating an issue regarding a battery inventory of the first battery exchange station;
receive a second alert from a mobile device (70), the second alert indicating that the first battery exchange station (20) does not release a second battery (30) in response to an insertion of a first battery into one of the battery slots of the first battery exchange station (20); and
provide an authorization to acquire the second battery (30) from the first battery exchange station (20) to the mobile device (70) if the first alert and the second alert are associated with the same battery exchange station.

12. The battery exchange system of claim 11, wherein the first battery exchange station (20) is configured to check the battery inventory in response to a restart of the first battery exchange station (20), wherein each of the battery slots (23) is provided with a sensor (27), the sensor (27) is configured to provide a sensing signal indicative of whether a corresponding one of the battery slots (23) is occupied, wherein the first battery exchange station (20) is configured to check the battery inventory by:
determining a quantity of a plurality of batteries (30) currently positioned in the first battery exchange station (20) based on the sensing signal provided by the sensor (27) positioned in each of the battery slots (23); and
verifying whether the quantity of the batteries (30) currently positioned in the first battery exchange station (20) matches a cached value, wherein the cached value is stored in a data storage device (17 or 28) of the first battery exchange station (20) or the backend system (15);
wherein the first battery exchange station (20) is configured to display an error reporting code on a user interface (22) of the first battery exchange station (20), wherein the error reporting code enables the mobile device (70) to send the second alert to the backend system (15) by scanning the error reporting code.

13. The battery exchange system of claim 11 or 12, wherein the backend system (15) is configured to provide the authorization to acquire the second battery (30) from the first battery exchange station (20) by:
sending a first battery retrieval code to the mobile device (70);
receiving a second battery retrieval code through a user interface (22) of the first battery exchange station (20);
verifying the second battery retrieval code based on the first battery retrieval code; and
in response to successful verification of the second battery retrieval code, instructing the first battery exchange station to release the second battery (30).

14. The battery exchange system of any of claims 11-13, wherein the backend system (15) is further configured to:
receive a request to subscribe to a battery exchange plan or to upgrade or resume a battery exchange plan subscription from the mobile device (70); and
send a third battery retrieval code to the mobile device (70) in response to receiving the request;
wherein a second battery exchange station of the plurality of battery exchange stations (20) is configured to release a third battery (30) in response to receiving the third battery retrieval code through a user interface (22) of the second battery exchange station (20), and wherein the backend system (15) is further configured to send a notice to a service crew device after the third battery (30) is released, the notice includes an instruction to deliver a fourth battery to the second battery exchange station (20).

15. The battery exchange system of any of claims 11-14, wherein the backend system (15) is further configured to:
receive a request to terminate, suspend or downgrade a battery exchange plan subscription from the mobile device (70);
reserve at least a first number of empty battery slots (23) at a third battery exchange station of the plurality of battery exchange stations (20) in response to receiving the request, the first number is equal to a sum of a default empty slot count and a quantity of one or more batteries to be returned;
receive a notice from the third battery exchange station (20), the notice indicating that the one or more batteries have been returned to the third battery exchange station (20); and
in response to receiving the notice, record data indicating that the battery exchange plan subscription has been terminated, suspended or downgraded.
